# EUROPEAN PATENT APPLICATION

(11) **EP 3 091 524 A1**
(43) Date of publication of application: **09.11.2016**
(21) Application number: 15166755.7
(22) Date of filing: 07.05.2015
(51) Int. Cl.: G08G 1/0962, G06K 9/00, G08G 1/0967

(54) **METHOD PERFORMED BY A TRAFFIC SIGN INFORMATION SYSTEM OPERABLE IN A VEHICLE FOR INFORMING A DRIVER ABOUT TRAFFIC SIGN INFORMATION**

(71) Applicant: Volvo Car Corporation, 40531 Göteborg (SE)
(72) Inventor: Lohse, Henrik, 3060 Espergærde (DK); Klit Olesen, Anna, 2000 Fredriksberg (DK)
(74) Representative: Volvo Car Corporation

(57) **Abstract**

Method performed by a traffic sign information system (100) operable in a vehicle for displaying traffic sign information, said method comprising the following steps, determining if start up event has been initiated, initiating detection of object (O) to obtain image and information about global position of object, determining if image of object contain image data related to a first group of traffic signs presenting or representing traffic information and when determined saving said image data and its related global position information as object data, detecting driver activity input and when detected determine an object among said detected objects (O) to be selected object (SO) and activating a display system (180) to display object data of selected object (SO) on at least one display (180A). A traffic sign information system (100) is also disclosed.

## Description

### Technical field

The present invention relates generally to a traffic sign information system operable in a vehicle for informing a driver about traffic sign information.

### Background art

In prior art it is known to detect traffic signs and to present them to the driver as a memory aid.

See for example US6801638B1 which presents a device and method for recognizing traffic signs and to display these as memory aids for an observer. Image data of an image sensor are analyzed and classified in an information processing unit, and on the basis of the results classification image segments and/or symbolic image representing data stored in a memory unit are recorded in a memory unit and are displayed by means of a display unit.

A drawback with the known prior art is that a continuous scanning of all possible objects which may be recognized as traffic signs require high computer power. Further, the information about the traffics signs recognized are shown to the driver when a certain time has passed or when a new sign has been recognized as the same type of traffic sign. When searching for a parking space or when traffic signs comprising a large amount of information need to be detected, the prior art method to recognize traffic signs is not fully applicable.

Parking or other traffic information may in some cases be retrieved from shared service network. However, sometimes such information cannot be retrieved and the driver must collect the information from local traffic signs with written traffic information. When navigating through traffic, especially in a town with heavy traffic, traffic signs can often be missed. Local parking rules or other information can also be difficult to interpret, comprehend and remember due to small font size and information provided in very complex manner. Further, the parking information relevant for a particular area or part of a street may not be the sign latest recognized.

### Summary of invention

An object of the present invention is to provide a method and a system for detecting information from a certain type of traffic signs and to present traffic information visible on a specific traffic sign to a driver. The method and system shall be reliable and require a limited amount of computer power.

According to one embodiment a method is provided which is performed by a traffic sign information system operable in a vehicle for displaying traffic sign information. Said method comprising the following steps:
- Determining if start up event has been initiated
- Initiating detection of object to obtain image and information about global position of object
- Determining if image of object contain image data related to a first group of traffic signs presenting or representing traffic information and when determined saving said image data and its related global position information as object data
- Detecting driver activity input and when detected determine an object among said detected objects to be selected object
- Activating a display system to display object data of selected object on at least one display.

With the method according to the invention it is possible to select objects to be detected and to sort among the traffic sign information detected by the system. Only the information relevant for a specific event is presented to the driver at a time when the driver performs a certain driver activity. The event is in one embodiment the detection of an upcoming parking situation. The determination of a possible upcoming parking situation may be a signal from the vehicle navigation system that the vehicle is approaching a final destination or a speed below a certain velocity. Only when this event is detected the system will start the detection of objects such as traffic signs. This decreases the amount of data regarding traffic sign information to be analyzed and stored by the system. A further advantage with the method according to the invention is that is ensures that the most relevant information is presented to the driver in real time.

According to another embodiment, the method further comprises:
- Converting saved image data into a synthetic image of selected object or into a graphical symbol representing the selected object or into a graphical symbol representing the information presented by selected object and save it as object data

According to another embodiment, the method further comprises:
- Converting saved image data into machine-encoded text representing the information provided by the object and save it as object data

According to another embodiment, the selected object is the latest detected object or wherein the selected object is one or more objects selected manually or automatically because of its global position or because of the information presented on or by the object.

According to another embodiment, the object data of selected object are displayed on at least two separate displays.

According to another embodiment, method further comprises:
- Detecting global position of vehicle
- Determining distance between vehicle global position and global position of selected object and save it as object data

According to another embodiment, said first group of traffic sign comprises at least one of the following: a parking sign, a non-parking sign or other national or international signs comprising traffic information or other written information and wherein said driver action is a parking action.

According to another embodiment, the method further comprises:
- Detecting if traffic information data is available in a shared service network, wherein
when traffic information data is not available, initiating system start up event, and
when traffic information is available, selecting traffic information data to be selected object data.

According to another embodiment a traffic sign information system operable in a vehicle for informing a driver of the vehicle about traffic sign information is provided. Said system comprising an object detection system and a display system comprising at least one display. The traffic sign information system further comprises a communication unit, a determination unit and a memory unit, wherein said memory unit containing instructions executable by said determination unit. Said traffic sign detection system is arranged to:
- Determine, by the determination unit if start up event has been initiated
- Initiate, by the communication unit, detection of object with the detection system to obtain image of and information about global position of object
- Determine, by the determination unit, if image of object contain image data related to a first group of traffic signs presenting or representing traffic information and when determined saving said image data and its related global position information as object data on the memory unit
- Detect, by the detection system, driver activity input and when detected determine, by the determination unit, an object among said detected objects to be selected object
- Activate, by the communication unit, a display system arranged to display object data of selected object on at least one display

According to another embodiment, said first group of traffic sign comprises at least one of the following: a parking sign, a non-parking sign or other national or international signs comprising traffic information or other written information and wherein said driver activity input is a parking action.

According to another embodiment, said system further comprise a conversion unit and further being arranged to:
- Convert, by the conversion unit, saved image data into a synthetic image of object or into a graphical symbol representing the object or into a graphical symbol representing the information presented by object and save it as object data on the memory unit
   or to
- Convert by the conversion unit, saved image data into machine-encoded text representing the information presented by object and save it as object data on the memory unit

According to another embodiment, said display system further comprise at least two in vehicle displays and wherein at least a part of the object data of the selected object is arranged to be displayed on each display.

According to another embodiment, a computer program is provided, comprising computer readable code means, which when run in a connected traffic sign information system is arranged to enable display of traffic sign information causes the connected traffic sign information system arranged to enable display of traffic sign information to perform the method according to any of the above embodiments, for example as described in [0007]-[0013].

According to another embodiment a computer program product is provided, comprising a computer readable medium and a computer program according to the above embodiment, for example as described in [0018], wherein the computer program is stored on the computer readable medium.

According to another embodiment a vehicle is provided comprising a vehicle information system according to any of the previous described embodiments, for instance according to [00014]-[0017].

Additional technical features and corresponding advantages of the above mentioned method, system, computer program and computer program product will be discussed in further detail in the following.

### Brief description of drawings

The invention is now described, by way of example, with reference to the accompanying drawings, in which:
Fig. 1 shows a perspective view of a vehicle comprising a traffic sign information system.
Fig. 2 disclose different type of traffic signs according to a first type of traffic signs.
Fig. 3 is a flow chart illustrating the method performed by the traffic sign information system.
Fig. 4a-4d is a flow chart illustrating different embodiments of the method performed by the traffic sign information system.
Fig. 5 illustrates the traffic sign information system.
Fig. 6 shows a further example of a traffic sign information system.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention.

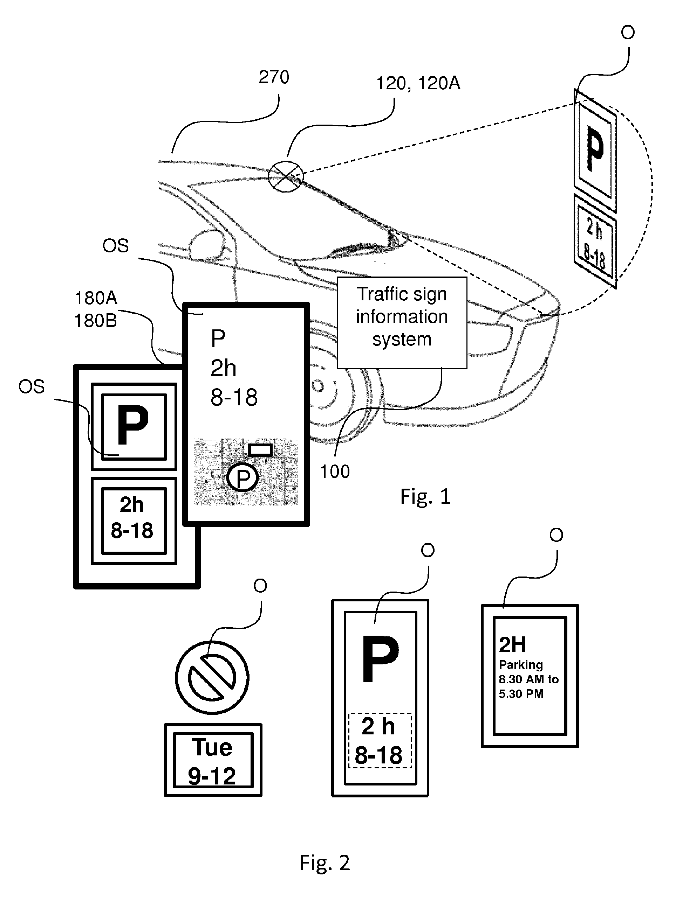

Fig.1 shows a perspective view of a vehicle 270 comprising the traffic sign information system 100 for displaying traffic sign information. The system comprises a detection system 120 and a detection device 120A, for example a camera system or an image acquisition system, for detecting objects O, i.e. a traffic sign, and scanning them to retrieve object data. When an object is detected by the traffic sign information system 100 and determined to be a traffic sign within a first group of traffic signs, object data is presented on a display system 180. According to one embodiment, the determination may be performed by an image processing step comparing the processed images with images which belong within a first group of traffic signs, and/or other preferences. Object data retrieved by the detection system 120 may for example be an image of the object or related image data, written traffic information relevant for the driver when performing a certain driving activity, for example parking and the global position of the object. The object data presented on the display is related to the retrieved object data and may be a real time photo of the object or the image converted into, by for example using image recognition algorithms or similar, a synthesized image, a graphical symbol of the object, a graphical symbol representing the information presented by object or a machine encoded text representing the written traffic information in the image of the object. The global position of the object may also be presented on the display system 180. In one embodiment the global position is presented on a map in relation to the global position of the vehicle. The display system 180 may comprise one or more in vehicle displays 180A, 180B, for example a CSD (centre stack display), a HUD (head up display), a DIM, or a display 180C on a mobile device such as a phone or computer or similar device. The information system 100 may further comprise one of e.g. the following: a IHU (Infotainment Head Unit), a TEM (Telematics Module), a CEM (Central Electronic Module) or an ECU (Electronic Control Module).

In one embodiment it is also possible to utilize traffic sign information and translate it into/onto the parking context represented in relevant displays. The parking context view may originate from a parking assistance system. Thus, for example, if an object is detected by the traffic sign information system 100 to be a non-parking sign or is detected to comprise information that parking is not allowed in an available parking space or on a specific location, the traffic sign information system 100 can visualize this by adding a graphical symbol representing the information presented by the sign on the parking context represented in relevant displays. A typical graphical symbol representing non parking may be a cross or a graphical representation of a non-parking sign. This graphical symbol/representation may also be added on a map shown on either one of the displays. This in order to visualize traffic sign information related to a specific map location.

Fig. 2 shows a different types of traffic signs with written information which may be analyzed by a traffic sign information system 100 according to the invention. Said signs belong within a first group of traffic sign presenting or representing certain traffic information comprising at least, parking signs, non-parking signs or other national or international signs comprising parking information or other written information. Said signs may for example be P-signs, short term parking signs, parking prohibited signs, embassy parking or handicap parking. Said written information may for example be time periods when parking is allowed (days, time of day etc) or prohibited and prices for parking.

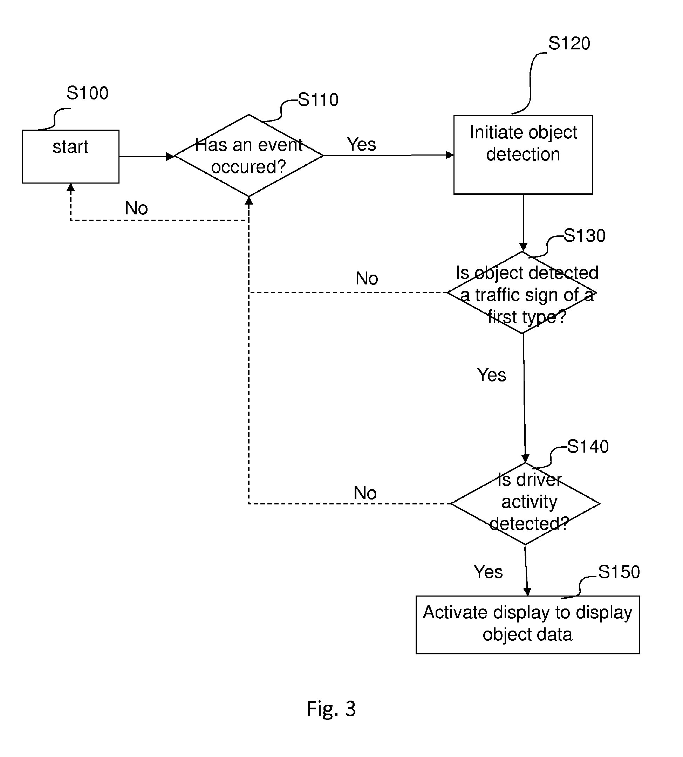

A procedure or method in a traffic sign information system 100 operable in a vehicle 270 for displaying traffic sign information will now be described with reference to Fig. 3. In a first step S100, the method is initiated. In other step S110 the occurrence of an event is detected. According to one embodiment, an event might be a manual input from a driver or an automatic startup of the system. According to another embodiment, an event might be that the driver is approaching a final destination set in a vehicle navigation system. An event may also be sensing of a vehicle speed below a certain speed, for example 50 km/h. According to one embodiment, the event is activation of an application in a mobile device, for example a smart phone. According to one embodiment, the event is triggered when a parking assistance system senses an available parking space. If an event has occurred, another step S120 is initiated. The step S120 initiates detection of objects by a detection system 120, comprising a detection device 120A, for example a camera system or an image acquisition system, to obtain an image of object. Said detection system 120 may also communicate with an in vehicle arranged GPS system 300 to obtain information about global position of object. The data may for instance be received from the detection device 120A and GPS system 300 either by wire, or wirelessly, via for example CAN-bus ( Controller Area Network) WiFi/Wireless Local Area Network (WLAN), Bluetooth, Radio Frequency Identification (RFID), ZigBee not limiting to other wireless communication means suitable for short or media range wireless communication. Next step S130 determines, by a determination unit 130, if image of object contain image data related to a first group of traffic signs, for example a parking sign or other signs presenting or representing certain traffic information related to parking. When the object is determined to be within the first group of traffic signs, said image data and its related global position information is stored on a memory unit 150 as object data. In one embodiment, said image data and its related global position information may be stored in a shared service network 155, such as a public, community or public cloud, and may be used by other systems or vehicles connected to said network. Next step of the method S140 detects driver activity input. Said driver activity input may be initiation of a parking process, either detected by driver related activities such as stopping the vehicle and placing the gear in reverse or a signal transmitted from a driver/parking assist system 400. When driver activity is detected an object among said detected objects is selected to be selected object. The selected object may in one embodiment be the latest detected object or in another embodiment one or more objects selected manually or automatically because of its global position or because of information presented on or by the object. Said above steps S110-S140 are repeated unit driver activity input is detected. In the next step S150 a display system 180 is activated to display object data of selected object on at least one display 180A, when driver activity input is detected. Said object data may comprise at least one of the following; an image of the selected object, a graphical symbol of the selected object, a graphical symbol representing the information presented by the selected object or a machine encoded text representing the written traffic information in the image of the selected object. Said object data further comprises a representation of the global position of the selected object. In one embodiment, further described in figure 3a, said object data further comprises the information about the distance from the vehicle to the selected object. A system specific memory 150 or a share service network 155A may comprise data about the graphical representation or symbol representing objects or traffic information said to belong within the first group of traffic signs.

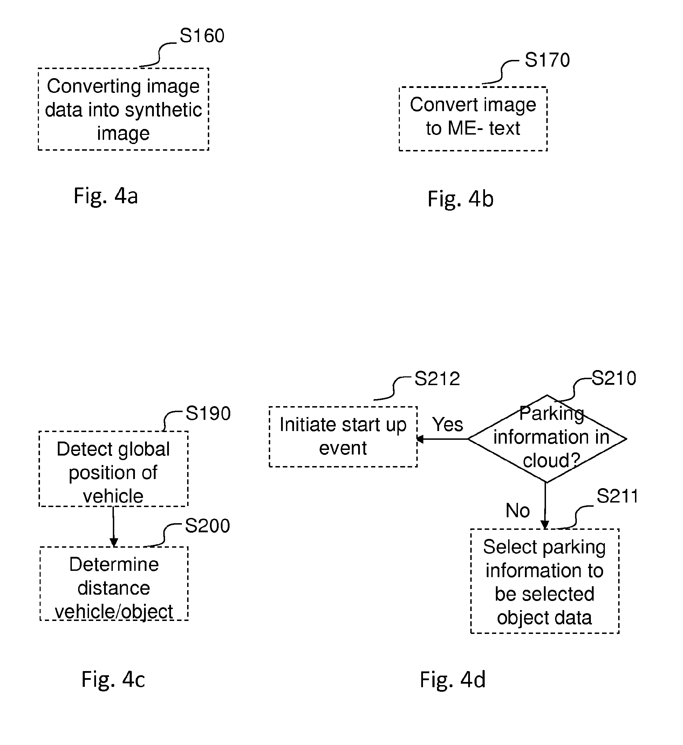

In one embodiment, shown in figure 4a, the method includes a further step S160 converting saved object data into a synthetic image of selected object and save it as further object data on a system specific memory 150 or on the shared service network 155. A synthetic image require less memory space when saved on the memory 150. Further, in a synthetic image blurriness or other discrepancies can be removed. This conversion step S160 may in one embodiment occur when the object is determined to be a traffic sign of the first type. The conversion step S160 may in one embodiment be performed by a conversion unit 120B arranged within the detection system 120 or being a part of a system specific determination unit 160.

In yet another embodiment, shown in figure 4b, said method further comprises the step S170 converting saved image data into machine-encoded text representing the information presented by object and save the information as further object data on a system specific memory 150 or on the shared service network 155. When the traffic sign information is saved as a machine-encoded text in a memory unit, either in the vehicle or on a shared network, it is possible to search in the traffic sign information and to for example suggest an area where parking is allowed at the specific day and time when the start-up event is detected. The machine-encoded text may also be translated into another language automatically set by the vehicle system or manually by the driver. This conversion step S170 may in one embodiment occur when the object is determined to be a traffic sign of the first type. The conversion step S170 may in one embodiment be performed by a conversion unit 120B arranged within the detection system 120 or being a part of a system specific determination unit 160.

In yet another embodiment shown in figure 4c the global position of vehicle 270 is detected in a step S190. The global position of the vehicle is preferably information originating from a signal transmitted by an in vehicle arranged GPS-system 300. In a step S200 a distance between the global position of the vehicle and the global position of selected object or objects is determined and the information is saved as further object data on the system specific memory unit 150. The further object data, i.e. the distance from the vehicle to the selected object may also be displayed on at least one displays 180A, 180B, 180C of the display system 180.

In yet another embodiment shown in figure 4d a step S210 is detecting if parking information is available in a shared service network 155. A shared service network may for example be a public, community or public cloud. When parking information is not available, a system start up event is initiated in a step S212. When parking information is available, the parking information is collected from the network, saved as further object data on a system specific memory unit 150 and determined to be selected object data in a step S211. Said selected object data, i.e. the parking information, may be displayed on at least one display 180A, 180B of the display system 180.

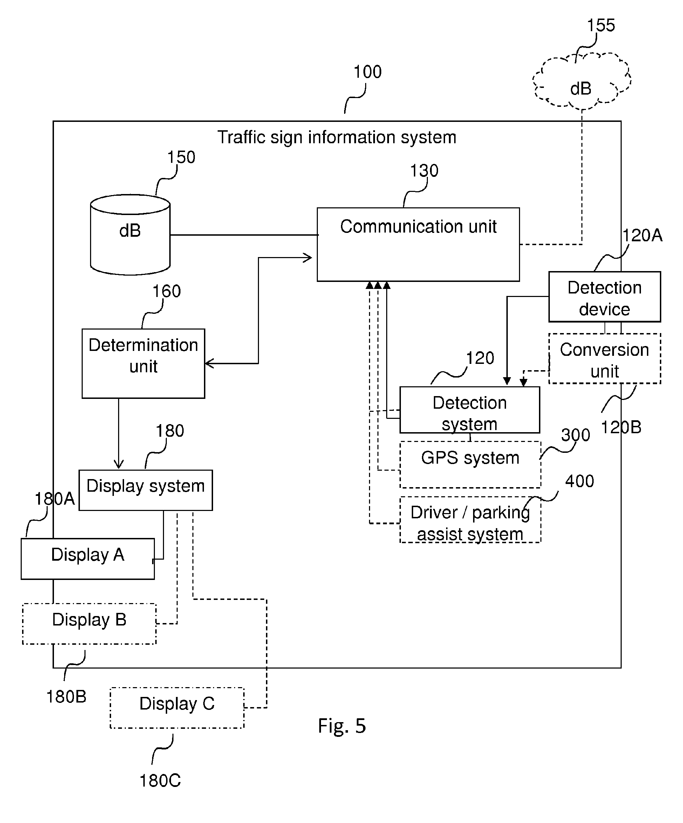

Fig. 5 discloses another visualization of the traffic sign information system 100. The traffic sign information system 100 comprises a communication unit 130, a determination unit 160 and a memory unit 150, wherein said memory containing instructions executable by the determination unit. The traffic sign information system further comprises an object detection system 120 and a display system 180 comprising at least one display 180A, 180B, 180C. The determination unit 160 is adapted to determine if the object detected belong within a first group of traffic signs, said to be a group of parking signs, and if a startup event and a driving activity event has occurred. The memory unit 150 may also be arranged to store traffic sign information data related to a first group of traffic sign, data about the graphical representation or symbol representing objects or traffic information said to belong within the first group of traffic signs, vehicle data, historical data, statistical data, configuration data, pre configuration data, or other type of data. The memory unit 150 may be based on a flash type of memory, disk drive of memory, virtual memory provided by a network access, not limiting to other types of storages.

The displays of the display system 180 may for example be vehicle internal displays such as for example a CSD (centre stack display), a HUD (head up display), DIM or a display 180C on an external unit such as a phone, computer or similar mobile devices. Different part of the information saved as object data may be selected to be shown on different displays. I.e. one display, for example 180A, may display an image of the detected object and another display, for example 180B may display a map on which the global position of the object/and or the object and for example the distance to the object is presented. On an external display 180C, it is for example possible to present object data relating to parking information valid on the specific place where a specific vehicle is parked.

The system 100 is arranged to receive data, via the communication unit 130, about an object O, from the detection system 120. Said detection system comprises a detection device 120A, for example a camera system or an image acquisition system, to obtain an image of object, and in one embodiment also a conversion unit 120B. Said conversion unit 120B is adapted to be able to convert the object image into a synthesized image or into machine encoded text representing the information on the image, for example by using image recognition algorithms. The detection system 200 may further be arranged to communicate with a vehicle internal GPS-system 300, via the communication unit 130 or directly. When an object is detected, the position data may be received from the GPS-system and associated with the object, i.e. the object is geotagged. The GPS-system 300 may also communicate the vehicle position when required. In one embodiment the system further comprises or communicates with a driver activity detection system or parking assistance system 400. The driver activity detection system 400 determines when a driver performes a certain activity, such as pressing the brake, putting the gear in reverse, turning the steering wheel or other parking related activities. A system detecting these activities may also be a parking assistance system, already present in the vehicle. The traffic sign system may also communicate, via the communication unit 130, with a shared service network 155. A shared service network may for example be a public, community or public cloud comprising for example parking information, information about road work or accidents or other information.

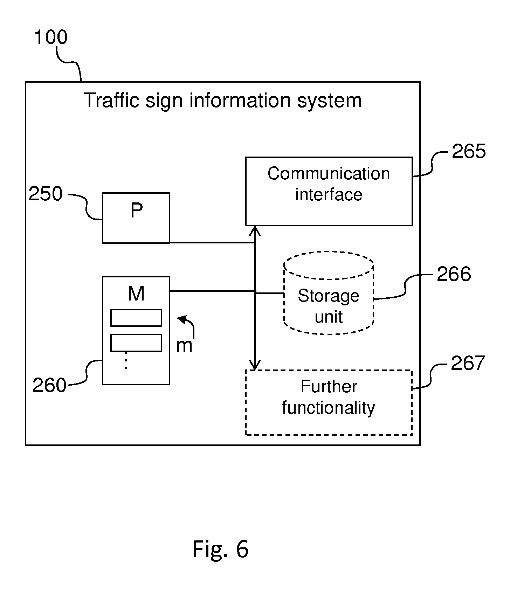

Fig. 6 shows an illustration of embodiments of a traffic sign information system 100. The traffic sign information system 100 may be implemented, by means of program modules of a respective computer program comprising code means which, when run by a processing unit 250 causes the traffic sign information system 100 to perform the above-described actions. The processing unit 250 may comprise a single Central Processing Unit (CPU), or could comprise two or more processing units. For example, the processing unit 250 may include general purpose microprocessors, instruction set processors and/or related chips sets and/or special purpose microprocessors such as Application Specific Integrated Circuits (ASICs). The processing unit 250 may also comprise a storage for caching purposes.

Each computer program may be carried by a computer program product 260 in the traffic sign information system 100, shown in Fig. 1, 2, 3 and 4 in the form of a memory having a computer readable medium and being connected to the processing unit 250. The computer program product 260 or memory thus comprises a computer readable medium on which the computer program is stored e.g. in the form of computer program modules "m". For example, the memory 260 may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the traffic sign information system 100.

The traffic sign information system 100 may further comprise a communication interface 265. The communication interface 265 may also be arranged to communicate with for example a vehicle specific parking assist system, shared network or vehicle internal or external communication devices such as an information screen, mobile communication device, computer or computer network. In an embodiment the communication interface 265 may comprise chip set adopted for communication via CAN bus (Controller Area Network) or communication adopted to ISO 11898. Other examples of standards which may be supported by the communication interface 265are: ZigBee, Bluetooth, RFID (Radio frequency identification), USB (Universal serial bus), or IEEE 802.11 (Institute of Electrical and Electronics Engineers), including but not limited to 802.11 a/b/n or other similar forthcoming standards. The communication interface 265 may comprise an antenna. The communication interface 265 may be connectable to an external antenna. The traffic sign information system 100 may further comprise one or more storage units 266 and further functionality 267 useful for the information system 100 to serve its purpose as a traffic sign information system, such as power supply, internal communications bus, internal cooling, database engine, operating system, not limiting to other functionalities.

A preferred embodiment of traffic sign information system according to the invention has been described. However, the person skilled in the art realizes that this can be varied within the scope of the appended claims without departing from the inventive idea.

All the described alternative embodiments above or parts of an embodiment can be freely combined without departing from the inventive idea as long as the combination is not contradictory.

## Claims

1. Method performed by a traffic sign information system (100) operable in a vehicle for displaying traffic sign information, said method comprising the following steps:
- Determining if start up event has been initiated
- Initiating detection of object (O) to obtain image and information about global position of object
- Determining if image of object contain image data related to a first group of traffic signs presenting or representing traffic information and when determined saving said image data and its related global position information as object data
- Detecting driver activity input and when detected determine an object among said detected objects (O) to be selected object (SO)
- Activating a display system (180) to display object data of selected object (SO) on at least one display (180A).

2. The method according to claim 1, wherein said method further comprising the step:
- Converting saved image data into a synthetic image of object (O) or into a graphical symbol representing the object or into a graphical symbol representing the information presented by object and save it as further object data

3. The method according to claim 1, wherein said method further comprising:
- Converting saved image data into machine-encoded text representing the information presented by object and save it as further object data

4. The method according to claim 1, wherein the selected object is the latest detected object or wherein the selected object is one or more objects selected manually or automatically because of its global position.

5. The method according to claim 1, wherein the object data of selected object (SO) is arranged to be displayed on at least two separate displays (180A, 180B).

6. The method according to any of the above claims, wherein said method further comprising the step:
- Detecting global position of vehicle (270)
- Determining distance between vehicle global position and global position of selected object (SO) and save it as further object data

7. The method according to any of the above claims, wherein said first group of traffic sign comprises at least one of the following: a parking sign, a non-parking sign or other national or international signs comprising traffic information or other written information and wherein said driver action is a parking action.

8. The method according to any of the above claims, wherein said method further comprising the step:
- Detecting if traffic information data is available in a shared service network (155), wherein
when traffic information data is not available, initiating system start up event, and
when traffic information data is available, selecting traffic information data to be selected object data.

9. A traffic sign information system (100) operable in a vehicle (270) for informing a driver of the vehicle (270) about traffic sign information, the traffic sign information system (100) comprising an object detection system (120) and a display system (180) comprising at least one display (180A, 180B, 180C), the traffic sign information system (100) further comprising a communication unit (130), a determination unit (160) and a memory unit (150), said memory unit containing instructions executable by said determination unit, whereby the traffic sign detection system (100) is operative for:
- Determine, by the determination unit (160) if start up event has been initiated
- Initiate, by the communication unit (130), detection of object with the detection system (120) to obtain image of and information about global position of object
- Determine, by the determination unit (160), if image of object contain image data related to a first group of traffic signs presenting or representing traffic information and when determined saving said image data and its related global position information as object data on the memory unit (150)
- Detect, by the detection system (120), driver activity input and when detected determine, by the determination unit (160), an object among said detected objects to be selected object
- Activate, by the communication unit (130), a display system (180) arranged to display object data of selected object on at least one display ( 180A)

10. The traffic sign information system (100) according to claim 9, wherein said first group of traffic sign comprises at least one of the following: a parking sign, a non-parking sign or other national or international signs comprising traffic information or other written information and wherein said driver action is a parking action.

11. The traffic sign information system (100) according to claim 9 or 10, wherein said detection system (120) further comprise a conversion unit (120B) and further being operative for:
- Convert, by the conversion unit (120B), saved image data into a synthetic image of object or into a graphical symbol representing the object or into a graphical symbol representing the traffic information presented by object and save it as further object data on the memory unit (150) or to
- Convert by the conversion unit (120B), saved image data into machine-encoded text representing the information presented by object and save it as further object data on the memory unit (150)

12. The traffic sign detection system (100) according to claim 9, 10 or 11, wherein said display system (180) further comprise at least two in vehicle displays (180A, 180B) and wherein at least a part of the object data of the selected object is arranged to be displayed on each display (180A, 180B).

13. A computer program, comprising computer readable code means to be run in a traffic sign detection system (100) operable in a vehicle, configured to inform a driver about traffic sign information, which computer readable code means when run in the traffic sign detection system (100) causes the traffic sign detection system (100) to perform the method according to any of the claims 1-8.

14. A computer program product, comprising a computer readable medium and a computer program according to claim 13, wherein the computer program is stored on the computer readable medium.

15. Vehicle (270) comprising a traffic sign detection system (100) according to any of the previous claims 9-12.
